(19) Europäisches Patentamt

European Patent Office

Office européen des brevets

(11) **EP 4 671 289 A1**

(12) **EUROPEAN PATENT APPLICATION**

(43) Date of publication:
**31.12.2025 Bulletin 2026/01**

(21) Application number: **24184899.3**

(22) Date of filing: **27.06.2024**

(51) International Patent Classification (IPC):
*C08F 210/06* (2006.01)   *C08L 23/12* (2006.01)

(52) Cooperative Patent Classification (CPC):
(C-Sets available)
**C08F 210/06; C08L 23/12;** C08L 2205/025;
C08L 2205/035                                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH
1020 Vienna (AT)**

(72) Inventors:
• **WANG, Jingbo
4021 Linz (AT)**

• **FAWAZ, Joel
4021 Linz (AT)**
• **GAHLEITNER, Markus
4021 Linz (AT)**
• **CHENG, Joy Jie
4021 Linz (AT)**
• **KNIESEL, Claudia
4021 Linz (AT)**
• **LUMMERSTORFER, Thomas
4021 Linz (AT)**

(74) Representative: **TBK
Bavariaring 4-6
80336 München (DE)**

(54) **FOUR-REACTOR SET-UP TO IMPROVE TOUGHNESS WITHOUT LOSS IN STIFFNESS OF POLYPROPYLENE-BASED POLYMERS**

(57)     The invention relates to a reactor thermoplastic polyolefin (rTPO) comprising 35.0 to 70.0 wt.-% of a polypropylene homopolymer fraction (PPH), 20.0 to 50.0 wt.-% of a random ethylene/propylene (C2C3) polymer fraction (rEP), 5.0 to 25.0 wt.-% of a first C2C3 elastomeric propylene copolymer fraction (EPC), and 4.0 to 20.0 wt.-% of a second C2C3 ethylene propylene copolymer fraction (EEPC). The rTPO has a melt flow rate MFR$_2$, according to ISO 1133 at 230 °C and 2.16 kg load, in the range of 1.0 to 5.0 g/10 min, a soluble fraction (SF) and a crystalline fraction (CF), wherein the soluble fraction is present in an amount in the range of 20.0 to 40.0 wt.-%, and a Charpy notched impact strength at 23 °C, of more than 75.0 kJ/m$^2$.

**FIG. 1**

Brittle-to-ductile transition temperature, BDTT

**(Cont. next page)**

EP 4 671 289 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/651;**
**C08F 210/06, C08F 4/6546;**
**C08L 23/12, C08L 23/142, C08L 23/16,**
**C08L 23/16;**
C08F 110/06, C08F 2500/12;
C08F 210/06, C08F 210/16, C08F 2500/12,
C08F 2500/17, C08F 2500/27, C08F 2500/30,
C08F 2500/31, C08F 2500/32, C08F 2500/34,
C08F 2500/35, C08F 2500/39

## Description

### Field of the invention

The present invention relates to a way to increase the toughness of thermoplastic materials while keeping the stiffness at a high level, in particular to a reactor thermoplastic polyolefin having both high toughness and stiffness, and to a composition comprising predominantly the reactor thermoplastic polyolefin. The invention furthermore relates to uses of this composition.

### Technical background

Reactor thermoplastic polyolefins (rTPOs), being a class of heterophasic polypropylene copolymers with ethylene as comonomer, are known for their good impact properties especially at low temperatures. This arises from EPC (ethylene-propylene copolymer) amorphous domains (elastomer-like domains/fractions) that are dispersed within the (typically) homopolymer matrix.

Conventionally, increase of toughness was achieved by having higher amount of amorphous domains, however, this comes at the cost of stiffness. In other words, stiffness is reduced whenever toughness is improved. This reduction in stiffness would limit the applications of rTPOs to areas where stiffness is required.

The use of fillers can increase the stiffness of such materials; however, with the current case of DfR (Design for Recycling) and mono-material approach, it is preferable to design the material properties by means of the polymer instead of fillers. Therefore, a rTPO with no stiffness loss is highly desired.

The prior art provides several approaches to adjust the material properties e.g. by means of polymer design, additives or amorphous domain amount.

For example, EP 2480606 B1 relates to a propylene polymer composition providing balance of properties, in particular improved impact properties. EP 3212711 B1 and EP 3212713 B1 both aim at a heterophasic polypropylene composition with an advantageous impact strength/stiffness balance and being based on a homo-homo-block (homopolymer, homopolymer, block copolymer) design. EP 3212712 B1 relates to a heterophasic polypropylene composition with high flowability and stiffness in combination with good impact performance and being based on a homo-homo-block design. EP 3953401 A1 relates to heterophasic polyolefin compositions and articles having low stress whitening. EP 3574025 B1 is concerned with a further homo-homo-block design heterophasic polyolefin composition and aims at improved optical properties.

### Summary of the invention

The inventors of the present invention surprisingly found that a reactor thermoplastic polyolefin (rTPO), in particular a polypropylene rTPO, having a homo-random-block-block design as defined in claim 1 provides a very good balance between stiffness and impact strength without need for excessive additives.

Specifically, the present invention relates to a (polypropylene) reactor thermoplastic polyolefin (rTPO) comprising:

(A) 35.0 to 70.0 wt.-% based on the rTPO of a polypropylene homopolymer fraction (PPH),
(B) 20.0 to 50.0 wt.-% based on the rTPO of a random ethylene/propylene (C2C3) polymer fraction (rEP),
(C) 5.0 to 25.0 wt.-% based on the rTPO of a first C2C3 elastomeric propylene copolymer fraction (EPC), and
(D) 4.0 to 20.0 wt.-% based on the rTPO of a second C2C3 ethylene propylene copolymer fraction (EEPC),

wherein

the rTPO has a melt flow rate $MFR_2$, according to ISO 1133 at 230 °C and 2.16 kg load, in the range of 1.0 to 5.0 g/10 min,
the rTPO has a soluble fraction (SF) and a crystalline fraction (CF), both determined by CRYSTEX measurement according to the description, wherein the soluble fraction (SF) is present in an amount in the range of 20.0 to 40.0 wt.-%, and
the rTPO has an impact strength, Charpy notched impact strength according to ISO 179-2 at 23 °C, of more than 75.0 $kJ/m^2$.

By means of the above-identified configuration, in particular the combination of a homopolymer - random copolymer arrangement (which is thought to form a matrix phase / fraction) with a first (amorphous) and a second (amorphous) ethylene/propylene polymer fraction achieves a surprisingly good balance between stiffness and impact strength.

The present invention also relates to a method for producing such a rTPO by means of a four-reactor setup, comprising a (first) stage for forming the PPH fraction, preferably in a slurry-type reactor, a subsequent (second) stage for forming the rEP fraction in a gas phase reactor, a subsequent (third) stage for forming the EPC fraction, and a subsequent (fourth) stage for forming the EEPC fraction, wherein the stage for forming the EEPC fraction employs a higher C2/C3 feed ratio than employed in the stage for forming the EPC fraction.

In addition, the invention relates to a composition containing predominantly (at least 90.000 wt.-%) the rTPO such that the properties of the composition are suitably governed by those of the rTPO. Moreover, the invention relates to a use of the rTPO and/or of the composition above.

## Definitions

In the present invention, amounts are given in % by weight (wt.-%) unless it is stated otherwise.

The term "comprising" (as well as terms "containing", "including" or "having") as used in the present invention does not exclude other components. For the purposes of the present invention, the term "consisting of" is considered to be a preferred embodiment of the term "comprising" (as well as terms "containing", "including" or "having") unless specifically defined otherwise. Likewise, if hereinafter a group is defined to comprise at least a certain number of members / embodiments, this is also to be understood to disclose a group, which preferably consists only of these members / embodiments, unless specifically defined otherwise. Unless explicitly described otherwise, the description of the present invention is to be understood so that one or more of any of the described preferred embodiments (aspects) of the invention can be combined with the invention described in its most general features and/or with features (or sub-features, such a most preferred features or any features of intermediate preference) of other embodiments (aspects).

Further, where an indefinite or definite article is used when referring to a singular noun, e.g. "a", "an" or "the", this includes a plural of that noun unless something else is specifically stated.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

## Detailed description of the invention

A detailed description of the rTPO, its components, the composition, the use and the method of the present invention will be provided below.

## Reactor thermoplastic polyolefin (rTPO)

The reactor thermoplastic polyolefin (rTPO) is a polymer (polymer in-reactor blend) having favorable properties (in particular favorable balance between stiffness and impact strength) which does not require excessive additive addition and thus can be used without or with minimum amounts of additives. As such, the rTPO of the present invention significantly facilitates recycling articles, such as packages, formed of the rTPO.

The rTPO contains (based on the rTPO being taken as 100 wt.-%) 35.0 to 70.0 wt.-% of the polypropylene homopolymer fraction (PPH), 20.0 to 50.0 wt.-% of the random ethylene/propylene (C2C3) polymer fraction (rEP), 5.0 to 25.0 wt.-% of the first C2C3 elastomeric propylene copolymer fraction (EPC), and 4.0 to 20.0 wt.-% of the second C2C3 ethylene propylene copolymer fraction (EEPC).

The rEP preferably has an ethylene content in the range of 1.50 to 12.00 wt.-%, more preferably in the range of 2.00 to 11.00 wt.-%, yet more preferably in the range of 2.50 to 10.00 wt.-%, even more preferably in the range of 2.80 to 9.00 wt.-%, most preferably in the range of 3.50 to 9.00 wt.-%, or in the range of 4.00 to 9.00 wt.-%. Within these ranges, it is easier to accomplish the favorable balance between stiffness and impact strength and this balance is more pronounced.

Preferably, the rTPO essentially consist of the PPH, the rEP, the EPC and the EEPC (essentially consists meaning that the total content thereof is 95 wt.-% or more relative to the rTPO as a whole). The total content of PPH, rEP, EPC and EEPC in the rTPO is preferably 96 wt.-% or more, 97 wt.-% or more, 98 wt.-% or more, or 99 wt.-% or more, and may be even 100 wt.-%. For example, the total content of PPH, rEP, EPC and EEPC in the rTPO may be in the range of from 95 wt.-% to 100 wt.-%. By applying the above-mentioned configuration, it is easier to accomplish the favorable balance between stiffness and impact strength and this balance is more pronounced.

The rTPO has a melt flow rate $MFR_2$, as measured in accordance with ISO 1133 at 230 °C and 2.16 kg load, in the range of 1.0 to 5.0 g/10 min. The $MFR_2$ (sometimes abbreviated as "MFR") is preferably in the range of 1.2 to 4.0 g/10 min, more preferably in the range of 1.4 to 3.5 g/10 min.

The rTPO has a soluble fraction (SF) and a crystalline fraction (CF), both determined by CRYSTEX analysis. The soluble fraction is present in an amount in the range of 20.0 to 40.0 wt.-%. The soluble fraction may also be referred to as dispersed phase / fraction, whereas the crystalline fraction may be referred to as matrix phase / fraction. The soluble fraction (SF) is preferably present in an amount in the range of 20.0 to 35.0 wt.-%, more preferably in the range of 20.0 to 30.0 wt.-%. By applying the above-mentioned configuration, it is easier to accomplish the favorable balance between stiffness and impact strength and this balance is more pronounced.

The ethylene content of the soluble fraction ($C2_{SF}$), as determined based on the CRYSTEX measurement and calibrated with (quantitative $^{13}C$) NMR spectroscopy, is preferably in in the range of 20.0 to 80.0 wt.-%, more preferably in the range of 25.0 to 60.0 wt.-%, or in the range of 28.0 to 50.0 wt.-%. By applying this configuration, it is easier to accomplish the favorable balance between stiffness and impact strength and this balance is more pronounced.

The ethylene content of the crystalline fraction ($C2_{CF}$), as determined based on the CRYSTEX measurement and calibrated with (quantitative $^{13}C$) NMR spectroscopy, is preferably in the range of 2.5 to 20.0 wt.-%, more preferably in the range of 3.0 to 15.0 wt.-%, or in the range of 3.5 to 8.0 wt.-%. By applying the above-mentioned configuration, it is easier to accomplish the favorable balance between stiffness and impact strength and this balance is more pronounced.

The rTPO particularly preferably has an intrinsic viscosity of the soluble fraction ($IV_{SF}$), determined by CRYSTEX measurement according to the description, in the range of 1.40 to 4.00 dL/g, more preferably in the range of 1.50 to 3.00 dL/g, or in the range of 1.60 to 2.50 dL/g. By applying the above-mentioned configuration, it is easier to accomplish the favorable balance between stiffness and impact strength and this balance is more pronounced.

The intrinsic viscosity of the crystalline fraction ($IV_{CF}$), determined by CRYSTEX measurement according to the description, is preferably in the range of 1.00 dL/g to 6.00 dL/g, more preferably in the range of 1.30 to 5.00 dL/g, yet more preferably in the range of 1.60 to 4.50 dL/g, even more preferably in the range of 1.80 to 4.00 dL/g, or in the range of 2.00 to 3.50 dL/g. By applying the above-mentioned configuration, it is easier to accomplish the favorable balance between stiffness and impact strength and this balance is more pronounced.

The rTPO preferably has an intrinsic viscosity $IV_{rTPO}$ (of the rTPO as a whole), determined by CRYSTEX measurement according to the description, in the range of 1.40 to 3.50 dL/g, more preferably in the range of 1.50 to 3.00 dL/g. By applying the above-mentioned configuration, it is easier to accomplish the favorable balance between stiffness and impact strength and this balance is more pronounced.

The rTPO preferably has a total ethylene content ($C2_{tot}$), determined by CRYSTEX measurement calibrated with NMR according to the description, in the range of 10.0 to 20.0 wt.-%. The total ethylene content ($C2_{tot}$) is more preferably in the range of 10.0 to 15.0 wt.-%, or in the range of 11.0 to 15.0 wt.-%. By applying such a configuration, it is easier to accomplish the favorable balance between stiffness and impact strength and this balance is more pronounced.

The rTPO preferably has a brittle to ductile transition temperature (BDTT), determined according to ISO 179-2, in the range of -30.0 °C to 10.0 °C. The brittle to ductile transition temperature (BDTT) is more preferably in the range of -30.0 °C to 0.0 °C, or in the range of -25.0 °C to -8.0 °C.

The rTPO preferably has a flexural modulus (FM), according to ISO 178, in the range of 600 to 900 MPa. The flexural modulus (FM) is more preferably in the range of 610 to 850 MPa, yet more preferably in the range of 650 to 850 MPa, even more preferably in the range of 650 to 830 MPa, most preferably in the range of 680 to 830 MPa, or in the range of 680 to 800 MPa. By applying the above-mentioned configuration, it is easier to accomplish the favorable balance between stiffness and impact strength and this balance is more pronounced.

The rTPO of the present invention has an impact strength IS (23 °C) (Charpy notched impact strength according to ISO 179-2, measured at 23 °C), of more than 75.0 kJ/m². The IS (23 °C) is preferably in the range of 75.0 to 200.0 kJ/m², such as in the range of 80.0 to 180.0 kJ/m², more preferably in the range of 100.0 to 160.0 kJ/m², or in the range of 120.0 to 150.0 kJ/m².

Preferably, the rTPO has an impact strength IS (-34 °C), Charpy notched impact strength according to ISO 179-1 at -34 °C, of less than 15.0 kJ/m², more preferably less than 10.0 kJ/m², such as in the range of from 1.0 to less than 15.0 kJ/m², or 2.0 to less than 10.0 kJ/m². The rTPO preferably has an impact strength IS (-10 °C), Charpy notched impact strength according to ISO 179-2 at -10 °C, in the range of 40.0 to 130.0 kJ/m², such as in the range of 50.0 to 110.0 kJ/m², or 55.0 to 100.0 kJ/m². The rTPO preferably has an impact strength IS (2 °C), Charpy notched impact strength according to ISO 179-2 at 2 °C, in the range of 50.0 to 200.0 kJ/m², such as in the range of 80.0 to 170.0 kJ/m², or 110.0 to 160.0 kJ/m².

The rTPO preferably has a normalized impact strength of at least 1.5, preferably at least 1.7 or at least 2.0. The normalized impact strength may for example be in the range of 1.5 to 5.0, such as in the range of 1.7 to 4.0 or in the range of 2.0 to 3.5. The normalized impact strength is determined as the ratio ($CIP_{rTPO}/CIP_{IrTPO}$) between the impact strength ($CIP_{rTPO}$), Charpy notched impact strength according to ISO 179-2 at 23 °C, of the rTPO and the impact strength ($CIP_{IrTPO}$), Charpy notched impact strength according to ISO 179-2 at 23 °C, of a limited reactor thermoplastic polyolefin (IrTPO), wherein the IrTPO is identical to the rTPO except for not containing the EEPC. In this respect, the term "identical to the rTPO except for not containing the EEPC" means that PPH, rEP and EPC are contained in the IrTPO in the same amounts as in the rTPO when considering only PPH, rEP and EPC (which necessarily results in seemingly different relative amounts). For example, a rTPO composition of 50 wt.-% PPH, 30 wt.-% rEP, 15 wt.-% EPC and 5 wt.-% EEPC would translate to an "identical" IrTPO composition having 50 wt.-parts PPH, 30 wt.-parts rEP, 15 wt.-parts EPC and 0 wt.-parts EEPC, i.e. about 52.6 wt.-% PP, 31.6 wt.-% rEP and 15.8 wt.-% EPC. In case additional components are contained, the same applies similarly, i.e. only the EEPC is omitted and the remaining components are considered in their respective (relative) amounts).

The rTPO preferably has a crystallization temperature (Tc), according to dynamic scanning calorimetry (DSC), in the range of 105.0 to 140.0 °C, more preferably in the range of 115.0 to 135.0 °C.

Preferably, the rTPO has a melting temperature (Tm), according to DSC, in the range of 150.0 to 175.0 °C, more preferably in the range of 155.0 to 170.0 °C.

The rTPO preferably has a xylene cold soluble content (XCS), measured in accordance with ISO 16152 at 25 °C, in the range of 15.0 to 38.0 wt.-%, more preferably in the range of 18.0 to 35.0 wt.-%, such as in the range of 21.0 to 30.0 wt.-%.

Preferably, the rTPO has a storage modulus G' (23 °C), as determined by dynamic mechanical analysis according to ISO 6721-7 at 23 °C, in the range of 250 to 650 MPa, more preferably in the range of 350 to 550 MPa.

Equally preferably, the rTPO has two glass transition temperatures, Tg(1) relating to the combined disperse phase (EPC and EEPC), and Tg(2) relating to the matrix phase, as determined by dynamic mechanical analysis according to ISO 6721-7 in torsion mode. Tg(1) is preferably in the range of from -65 °C to -35 °C, such as in the range of -60 °C to -40 °C, or in the range of -57 °C to -45 °C. Tg(2) is preferably in the range of from -10 °C to 10 °C, such as in the range of -8 °C to 8 °C, or in the range of -6 °C to 6 °C.

The rTPO is preferably nucleated by means of a polymeric α-nucleating agent, more preferably at least one of poly(vinyl cyclohexane) and poly(vinyl cyclopentane). The polymeric α-nucleating agent being preferably present in an amount (total amount in case multiple polymeric nucleating agents are present) in the range of 0.0001 to 0.1000 wt.-%, more preferably in the range of 0.0050 to 0.0500 wt.-%, or in the range of 0.0008 to 0.0100 wt.-%, relative to the rTPO as a whole being taken as 100%.

**Polypropylene homopolymer fraction (PPH),**

The PPH (component (A)) is contained in the rTPO in an amount in the range of 35.0 to 70.0 wt.-%. The content thereof is preferably in the range of 40.0 to 68.0 wt.-%, more preferably 42.0 to 62.0 wt.-%.

In the present invention, the PPH is a polypropylene homopolymer in which preferably only propylene units are detectable (e.g. determined with $^{13}$C NMR spectroscopy). However, a skilled person and the present invention appreciates that production methods commonly employed in the art may result in contamination with polymer units which are not based on propylene. Even though it is usually desired to keep such contaminations at a low level (i.e. in trace amounts), the homopolymer may contain certain amounts of contaminate comonomers, e.g. alpha-olefin comonomers. As such, the term homopolymer, as used herein, refers to a polypropylene polymer containing at least 99.0 wt.-%, preferably at least 99.8 wt.-%, more preferably at least 99.9 wt.-%, most preferably 100 wt.-% of propylene units (e.g. determined by quantitative $^{13}$C NMR spectroscopy), as long as the claimed requirements of the individual constituents as well as that of the PPH are satisfied.

Preferably, the PPH forms a matrix phase in the rTPO. The PPH is preferably formed in a loop reactor in the presence of a Ziegler-Natta catalyst.

The PPH preferably has a $MFR_2$, according to ISO 1133 at 230 °C and 2.16 kg load, in the range of 1.0 to 25.0 g/10 min, more preferably in the range of 2.0 to 10.0 g/10 min, even more preferably in the range of 2.5 to 8.0 g/10 min, or in the range of 3.0 to 7.0 g/10 min. The matrix split of the PPH, being the content of PPH relative to all matrix polymers, is preferably in the range of from 45 to 80 wt.-%, more preferably in the range of from 50 to 75 wt.-%, or in the range of from 55 to 70 wt.-%.

**Random ethylene/propylene polymer fraction (rEP)**

The random ethylene/propylene (C2C3) polymer fraction (rEP) is contained in the rTPO in an amount in the range of 20.0 to 50.0 wt.-%. The content thereof is preferably in the range of 22.0 to 45.0 wt.-%, more preferably 24.0 to 40.0 wt.-%.

Preferably, the rEP forms a matrix phase in the rTPO. The rEP is preferably formed in a gas phase reactor in the presence of a Ziegler-Natta catalyst.

The rEP preferably has a C2 content ($C2_{rEP}$), determined by quantitative NMR, in the range of 1.50 to 12.00 wt.-%, more preferably in the range of 2.00 to 11.00 wt.-%, yet more preferably in the range of 2.50 to 10.00 wt.-%, even more preferably in the range of 2.80 to 9.00 wt.-%, most preferably in the range of 3.50 to 9.00 wt.-%, such as in the range of 4.00 to 9.00 wt.-%.

Preferably, the rEP is formed predominantly of ethylene and propylene units, but may contain other units of α-olefins with 4-10 carbon atoms. In particular, it is preferred that at least 90 wt.-% of the rEP be formed of ethylene and propylene monomer units, more preferably at least 95 wt.-%, even more preferably at least 98 wt.-% or at least 99 wt.-%

(total content of ethylene and propylene units determined by quantitative NMR). The total content ethylene and propylene units may be up to 100 wt.-%.

The rEP preferably has a $MFR_2$, according to ISO 1133 at 230 °C and 2.16 kg load, in the range of 0.05 to 1.00 g/10 min, more preferably in the range of 0.10 to 0.80 g/10 min, yet more preferably in the range of 0.15 to 0.60 g/10 min, or in the range of 0.20 to 0.50 g/10 min. The matrix split of the rEP, being the content of rEP relative to all matrix polymers, is preferably in the range of from 20 to 55 wt.-%, more preferably in the range of from 25 to 50 wt.-%, or in the range of from 30 to 45 wt.-%.

**First C2C3 elastomeric propylene copolymer fraction (EPC)**

The first C2C3 elastomeric propylene copolymer fraction (EPC) is contained in the rTPO in an amount in the range of 5.0 to 25.0 wt.-%. The content thereof is preferably in the range of 8.0 to 20.0 wt.-%, more preferably 10.0 to 17.0 wt.-%.

Preferably, the EPC forms a dispersed phase (amorphous phase) in the rTPO together with the second C2C3 ethylene propylene copolymer fraction (EEPC). The EPC is preferably formed in a gas phase reactor in the presence of a Ziegler-Natta catalyst.

The EPC is formed predominantly of ethylene and propylene units, but may contain other units of $\alpha$-olefins with 4-10 carbon atoms. In particular, it is preferred that at least 90 wt.-% of the EPC be formed of ethylene and propylene monomer units, more preferably at least 95 wt.-%, at least 98 wt.-% or at least 99 wt.-% (total content of ethylene and propylene units determined by quantitative NMR). The total content ethylene and propylene units may be up to 100 wt.-%.

The EPC preferably has a C2 content ($C2_{EPC}$), determined by quantitative NMR, of 35.00 wt.-% or more, preferably in the range of 35.00 to 95.00 wt.-%, such as in the range of 35.00 to 80.00 wt.-%, more preferably in the range of 38.00 to 75.00 wt.-%, yet more preferably in the range of 42.00 to 70.00 wt.-%, even more preferably in the range of 45.00 to 66.00 wt.-%, or in the range of 50.00 to 65.00 wt.-%.

The EPC preferably has a $MFR_2$, according to ISO 1133 at 230 °C and 2.16 kg load, in the range of 3.0 to 25.0 g/10 min, more preferably in the range of 4.0 to 12.0 g/10 min, yet more preferably in the range of 4.5 to 10.0 g/10 min, or in the range of 5.0 to 9.0 g/10 min. The dispersed phase split (also referred to as GPR2/GPR3 split) of the EPC, being the content of EPC relative to all dispersed phase polymers, is preferably in the range of from 35 to 85 wt.-%, more preferably in the range of from 40 to 80 wt.-%, or in the range of from 45 to 75 wt.-%.

**Second C2C3 ethylene propylene copolymer fraction (EEPC)**

The EEPC is contained in the rTPO in an amount in the range of 4.0 to 20.0 wt.-%. The content thereof is preferably in the range of 5.0 to 15.0 wt.-%, more preferably 5.5 to 12.0 wt.-%, such as 6.0 to 11.0 wt.-%.

The second C2C3 ethylene propylene copolymer fraction (EEPC) has a different content in C2 as compared to the EPC. While it is thus necessary that the C2 contents of EPC and EEPC are different, i.e. the difference between C2 contents is greater than 0, the difference is preferably 1 wt.-percentage point (relative to the EPC or EEPC taken as 100%) or more, more preferably 3 wt.-percentage points or more, more preferably 5 wt.-percentage points or more, or 7 wt.-percentage points or more.

In general, the rTPO may be produced by a series of reactions to create an in-reactor blend of polymers which actually results in an arrangement comprising a matrix fraction (or matrix phase) and a dispersed fraction (dispersed phase). Each of matrix fraction and dispersed fraction may be formed of a single polymer or of two or more polymers. Polymerization in the presence of a Ziegler-Natta catalyst is particularly preferred since this facilitates adjusting the properties of the rTPO in a favorable manner.

Preferably, the EEPC forms a dispersed phase (amorphous phase) in the rTPO together with the first C2C3 ethylene propylene copolymer fraction (EPC). The EEPC is preferably formed in a gas phase reactor in the presence of a Ziegler-Natta catalyst.

The EEPC is formed predominantly of ethylene and propylene units, but may contain other units of $\alpha$-olefins with 4-10 carbon atoms. In particular, it is preferred that at least 90 wt.-% of the EEPC be formed of ethylene and propylene monomer units, more preferably at least 95 wt.-%, at least 98 wt.-% or at least 99 wt.-% (total content of ethylene and propylene units determined by quantitative NMR). The total content ethylene and propylene units may be up to 100 wt.-%.

The EEPC preferably has a C2 content ($C2_{EEPC}$), determined by quantitative NMR, of 35.00 wt.-% or more, preferably in the range of 35.00 to 95.00 wt.-%, such as in the range of 35.00 to 75.00 wt.-%, yet more preferably in the range of 38.00 to 70.00 wt.-%, even more preferably in the range of 40.00 to 65.00 wt.-%, most preferably in the range of 42.00 to 60.00 wt.-%, or in the range of 43.00 to 59.00 wt.-%.

The EEPC preferably has a $MFR_2$, according to ISO 1133 at 230 °C and 2.16 kg load, in the range of 0.5 to 10.0 g/10 min, more preferably in the range of 0.7 to 8.0 g/10 min, in the range of 0.9 to 6.0 g/10 min, or in the range of 1.0 to 5.0 g/10 min.

The dispersed phase split (also referred to as GPR2/GPR3 split) of the EEPC, being the content of EEPC relative to all dispersed phase polymers, is preferably in the range of from 15 to 65 wt.-%, more preferably in the range of from 20 to 60 wt.-%, or in the range of from 25 to 55 wt.-%.

**Preparing the rTPO**

In general, the rTPO may be produced by a series of reactions to create an in-reactor blend of polymers which actually results in an arrangement comprising a matrix fraction (or matrix phase) and a dispersed fraction (dispersed phase). Each of matrix fraction and dispersed fraction may be formed of a single polymer or of two or more polymers. Polymerization in the presence of a Ziegler-Natta catalyst is particularly preferred since this facilitates adjusting the properties of the rTPO in a favorable manner.

Preferably, the rTPO is a reactor blend (in-reactor blend) made in a polymerization process (also referred to as polymerization method) comprising at least four stages, in the presence of a catalyst system. The catalyst system is preferably a Ziegler Natta catalyst system.

This polymerization process, comprising at least four stages, preferably applies a slurry reactor (SR) - gas phase reactor (GPR1) - gas phase reactor (GPR2) - gas phase reactor (GPR3) cascade, such that the PPH is made in the SR, the rEP is made in the GPR1, the EPC is made in the GPR2, and the EEPC is made in the GPR3. The catalyst system is preferably present at least in the SR (and is most preferably present in each of the four stages).

The polymerization process preferably further comprises pre-polymerizing a Ziegler-Natta catalyst forming the Ziegler-Natta catalyst system with a suitable monomer, preferably vinyl cyclohexane or vinyl cyclopentane, to produce a polymeric α-nucleating agent.

In the polymerization process, the second C2C3 ethylene propylene copolymer fraction (EEPC) is preferably produced in a gas phase reactor (GPR) under conditions of a C2/C3 ratio (ethylene/propylene ratio) of 1600 mol/kmol or less, preferably in the range of 500 to 1600 mol/kmol, such as 700 to 1580 mol/kmol, more preferably 900 to 1550 mol/kmol, or 1100 to 1525 mol/kmol.

Preferably, the EPC is produced in a gas phase reactor (GPR) and the second C2C3 ethylene propylene copolymer fraction (EEPC) is independently produced in a (further) gas phase reactor (GPR).

Preferably, C2/C3 ratio (feed ratio) when producing the EEPC is at least 1.2 times, more preferably at least 1.5 times, or at last 2.0 times, such as 1.2 times to 5.5 times, 1.5 times to 5.0 times, or 2.0 times to 4.0 times the C2/C3 ratio (feed ratio) when producing the EPC.

The rTPO is particularly preferably produced (or obtained or obtainable) by the method of the present invention and the method of the present invention is preferably embodied to comprise one or two or more, such as each of the features of the polymerization process mentioned above.

The method of the present invention is a method for producing the rTPO of the present invention and comprises producing the reactor thermoplastic polyolefin (rTPO) by a process comprising the steps of:

a) Polymerizing propylene in the presence of a Ziegler-Natta type catalyst system in a first polymerization reactor, for producing the polypropylene homopolymer fraction (PPH) as a first polymer fraction (A);

b) Transferring the polymerization mixture comprising the Ziegler-Natta type catalyst system and the first polymer fraction from the first polymerization reactor to a second polymerization reactor;

c) Polymerizing propylene and ethylene in the presence of the Ziegler-Natta type catalyst system in the second polymerization reactor for producing the random ethylene/propylene (C2C3) polymer fraction (rEP) as a second polymer fraction (B);

d) Transferring a polymerization mixture comprising the Ziegler-Natta type catalyst system and the first and second polymer fractions from the second polymerization reactor to a third polymerization reactor;

e) Polymerizing propylene and ethylene in the presence of the Ziegler-Natta type catalyst system in the third polymerization reactor for producing the first C2C3 elastomeric propylene copolymer fraction (EPC) as a third polymer fraction (C), which is dispersed in the first and second polymer fractions acting as matrix;

f) Transferring a polymerization mixture comprising the Ziegler-Natta type catalyst system and the first, second and third polymer fractions from the third polymerization reactor to a fourth polymerization reactor;

g) Polymerizing propylene and ethylene in the presence of the Ziegler-Natta type catalyst system in the fourth polymerization reactor, at a higher C2/C3 (feed) ratio than employed in the third polymerization reactor, for producing the second C2C3 ethylene propylene copolymer fraction (EEPC) as a fourth polymer fraction (D), which is dispersed in the matrix;

h) Withdrawing the polymerization mixture comprising the Ziegler-Natta type catalyst system, the first, second, third and fourth polymer fractions (A, B, C, D) from the fourth polymerization reactor; and

i) Obtaining the reactor thermoplastic polyolefin (rTPO) comprising the polypropylene homopolymer fraction (PPH) and the random ethylene/propylene (C2C3) polymer fraction (rEP) as matrix and the first C2C3 elastomeric propylene copolymer fraction (EPC) as well as the second C2C3 ethylene propylene copolymer fraction (EEPC) being dispersed in the matrix.

The process may further comprise a pre-polymerization step prior to the (first) polymerization step in the first polymerization reactor, wherein, in the pre-polymerization step, a mixture of the Ziegler-Natta catalyst system and a polypropylene pre-polymer produced in a pre-polymerization reactor is obtained. Subsequent to the pre-polymerization, the mixture of the Ziegler-Natta catalyst system and the polypropylene pre-polymer produced in the pre-polymerization reactor is transferred to the first polymerization reactor.

Preferably, the second polymerization reactor is a first gas phase reactor (GPR1), the third polymerization reactor is a second reactor gas phase reactor (GPR2), and the fourth polymerization reactor is a third reactor gas phase reactor (GPR3). More preferably, the first polymerization reactor is a slurry reactor (SR), the second polymerization reactor is a first gas phase reactor (GPR1), the third polymerization reactor is a second reactor gas phase reactor (GPR2), and the fourth polymerization reactor is a third reactor gas phase reactor (GPR3).

**Catalyst**

As said above, the rTPO is preferably prepare in the presence of a Ziegler-Natta catalyst system (which may also be abbreviated as Ziegler-Natta catalyst).

The Ziegler-Natta catalyst system preferably comprises

(a) a Ziegler-Natta catalyst (ZN-C) comprising compounds (TC) of a transition metal of Group 4 to 6 (according to IUPAC), a Group 2 metal compound (MC) and an internal donor (ID),
(b) a co-catalyst (Co).

The Ziegler-Natta catalyst system preferably further comprises an external donor (ED).

The Ziegler-Natta catalyst (system) is preferably present in the first polymerization stage, i.e. in a pre-polymerization or in a first main polymerization (e.g. when preparing the PPH).

It is particularly preferred that the rTPO is polymerized (prepared) in the presence of a Ziegler-Natta catalyst that does not comprise phthalate-based electron donors. As such, it is preferred that the rTPO is free of phthalic esters and their decomposition products.

Suitable non-phthalate Ziegler-Natta type catalysts are described in WO 2014/187687 A1, e.g. in inventive example IE2 of that document, as well as WO2017/198633 A1 (see Examples) and WO2017/148970 A1 (see Examples).

The Ziegler-Natta Catalyst will be described in more detail. The catalyst used in the present invention is preferably a solid Ziegler-Natta catalyst (ZN-C), which comprises a Group 4 to 6 metal compound (TC), such as a titanium compound, a Group 2 metal compound (MC), such as a magnesium compound and an internal donor (ID). The internal donor (ID) is preferably a non-phthalic internal donor, such as a non-phthalic acid ester, most preferably diester of non-phthalic dicarboxylic acids as described in more detail below. Thus, the catalyst used in the present invention is preferably fully free of undesired phthalic compounds.

The Ziegler-Natta catalyst can be further defined by the way as obtained. The Ziegler-Natta catalyst (ZN-C) may be obtained by a process comprising the steps of

a) providing a solution of at least one complex being a complex of a group 2 metal compound (MC) and an alcohol comprising in addition to the hydroxyl moiety at least one further oxygen bearing moiety being different to a hydroxyl group, and optionally at least one complex being a complex of said group 2 metal compound (MC) and an alcohol not comprising any other oxygen bearing moiety,
b) combining said solution with a Group 4 to 6 metal compound (TC) and producing an emulsion the dispersed phase of which contains more than 50 mol.-% of the group 2 metal;
c) agitating the emulsion in order to maintain the droplets of said dispersed phase preferably within an average size range of 5 to 200 $\mu$m;
d) solidifying said droplets of the dispersed phase;
e) recovering the solidified particles of the olefin polymerization catalyst component, and wherein an internal donor (ID) is added at any step prior to step c) and said internal donor (ID) is non-phthalic acid ester, preferably said internal donor (ID) is a diester of non-phthalic dicarboxylic acids as described in more detail below.

Specifically, the Ziegler-Natta catalyst (ZN-C) is preferably obtained by a process comprising the steps of

a)

a1) providing a solution of at least a Group 2 metal alkoxy compound (Ax) being the reaction product of a Group 2 metal compound (MC) and an alcohol (A) comprising in addition to the hydroxyl moiety at least one ether moiety optionally in an organic liquid reaction medium; or

a2) a solution of at least a Group 2 metal alkoxy compound (Ax') being the reaction product of a Group 2 metal compound (MC) and an alcohol mixture of the alcohol (A) and a monohydric alcohol (B) of formula ROH, optionally in an organic liquid reaction medium; or

a3) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; and

b) adding said solution from step a) to at least one compound (TC) of a transition metal of Group 4 to 6 and

c) obtaining the solid catalyst component particles,

and adding a preferably non-phthalic internal electron donor (ID) at any (arbitrary) step prior to step c).

The internal donor (ID) or precursor thereof is added preferably to the solution of step a).

According to the procedure above, the Ziegler-Natta catalyst (ZN-C) can be obtained via precipitation method or via emulsion (liquid/liquid two-phase system) - solidification method depending on the physical conditions, especially temperature used in steps b) and c). In both methods (precipitation or emulsion-solidification) the catalyst chemistry is the same.

In precipitation method combination of the solution of step a) with at least one transition metal compound (TC) in step b) is carried out and the whole reaction mixture is kept at least at 50°C, more preferably in the temperature range of 55 to 110°C, more preferably in the range from 70 to 100°C, to secure full precipitation of the catalyst component in form of a solid particles (step c).

In emulsion - solidification method in step b) the solution of step a) is typically added to the at least one transition metal compound (TC) at a lower temperature, such as from -10 to below 50°C, preferably from -5 to 30°C. During agitation of the emulsion, the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C. The catalyst prepared by emulsion - solidification method is preferably used in the present invention.

In a preferred embodiment in step a) the solution of a2) or a3) are used, i.e. a solution of (Ax') or a solution of a mixture of (Ax) and (Bx). Preferably the Group 2 metal (MC) is magnesium.

The magnesium alkoxy compounds (Ax), (Ax') and (Bx) can be prepared *in situ* in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_6$ -$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$ - $C_{20}$ alkyl, preferably $C_2$ - $C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably, dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"(OH)$_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and s is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt.-% solution in a solvent as indicated above. Typical commercially available Mg compound, especially dialkyl magnesium solutions are 20 - 40 wt.-% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from o-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100 $\mu$m. Particles preferably are compact with low porosity and have surface area below 20 $g/m^2$, more preferably below 10 $g/m^2$. Typically the amount of Ti is 1 to 6 wt.-%, the amount of Mg is 10 to 20 wt.-% and the amount of donor is 10 to 40 wt.-% of the catalyst composition.

Detailed description of preparation of catalysts is disclosed in WO2017/148970 A1, WO2012/007430 A1, EP2610271 A1, EP261027 A1 and EP2610272 A1 which are incorporated here by reference.

The Ziegler-Natta catalyst (ZN-C) is preferably used in association with an alkyl aluminum cocatalyst and optionally external donors.

As further component in the instant polymerization process, an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, isopentyl, tert.-butyl, tert.-amyl, neopentyl, cyclopentyl, cyclohexyl, methylcyclopentyl and cycloheptyl. More preferably, both $R^3$ and $R^4$ are the same, yet more preferably both $R^3$ and $R^4$ are an ethyl group.

Especially preferred external donors (ED) are the dicyclopentyl dimethoxy silane donor (D donor) or the cyclohexylmethyl dimethoxy silane donor (C-Donor). In addition to the Ziegler-Natta catalyst (ZN-C) and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably, the ratio between the co-catalyst (Co) and the external donor (ED) [Co/ED] and/or the ratio between the co-catalyst (Co) and the transition metal (TM) [Co/TM] should be adjusted within certain limits. More specifically,

(a) the mol-ratio of co-catalyst (Co) to external donor (ED) [Co/ED] should preferably be in the range from 5 to 45, preferably is in the range from 5 to 35, more preferably is in the range from 5 to 25; and optionally
(b) the mol-ratio of co-catalyst (Co) to titanium compound (TC) [Co/TC] should preferably be in the range from above 80 to 500, preferably is in the range from 100 to 350, still more preferably is in the range from 120 to 300.

When employing a Ziegler-Natta catalyst system in a multi-reactor arrangement as pointed out above, it is preferred that at least part of, preferably all of, the Ziegler-Natta catalyst (ZN-C) be fed into the first polymerization reactor and is transferred with the polymer (slurry) obtained in the first polymerization reactor into the subsequent reactors, should any subsequent reactors be used. If the process covers also a pre-polymerization step, it is preferred that at least part of, preferably all of, the Ziegler-Natta catalyst (ZN-C) be fed into the pre-polymerization reactor. Subsequently the pre-polymerization product containing the Ziegler-Natta catalyst (ZN-C) is transferred into the first polymerization reactor. Co-catalyst and, if present, external donor, are preferably fed together with the ZN-C.

A preferable catalyst system for producing the rTPO of the present invention (as well as a production method for such a catalyst system) is described in WO2017/148970 A1 and EP4141068 A1, which is herewith incorporated by reference.

**Polypropylene composition**

The rTPO of the present invention can provide favorable properties without the need for high amounts of additives. In order to maintain these favorable properties along with good recycling properties, the polypropylene composition (PPC) of the present invention thus comprises (based on the total weight of the PPC) 90.000 to 99.999 wt.-%, preferably 95.000 to 99.990 wt.-%, more preferably 97.000 to 99.950 wt.-%, most preferably 97.500 to 99.900 wt.-%, of the reactor thermoplastic polyolefin (rTPO) according to the present invention.

Nevertheless, the PPC may of course contain additives, modifiers and/or nucleating agents even though small amounts thereof are preferred. In particular, the PPC may comprise at least one selected from the group consisting of non-polymeric nucleating agent(s) and additive(s) based on the PPC. The additives are preferably one or two or more selected from the group consisting of antioxidants, UV-stabilizers, antistatic agents, acid scavenges, slip agents and mixtures thereof. The non-polymeric nucleating agent(s), if contained, is(are) preferably at least one selected from $\alpha$-nucleating agent(s).

The non-polymeric nucleating agent(s) is(are) preferably contained in a total amount of 4.000 wt.-% or less (including the case of not containing non-polymeric nucleating agent(s)), such as in the range of 0.001 to 3.000 wt.-%, in the range of 0.010 to 2.500 wt.-%, in the range of 0.010 to 2.000 wt.-%, in the range of 0.050 to 1.800 wt.-%, or in the range of 0.100 to 1.500 wt.-% (based on the total weight of the PPC). The additive(s) is(are) preferably contained in a total amount of up to 10.000 wt.-%, such as in the range of 0.001 to 10.000 wt.-%, more preferably in the range of 0.010 to 5.000 wt.-%, yet more preferably in the range of 0.010 to 3.500 wt.-%, even more preferably in the range of 0.015 to 3.000 wt.-%, further more preferably in the range of 0.025 to 2.500 wt.-%, even further more preferably in the range of 0.050 to 1.500 wt.-%, or in the range of 0.075 to 0.750 wt.-% (based on the total weight of the PPC) additive(s) based on the PPC, said additives being preferably selected from the group consisting of antioxidants, UV-stabilizers, antistatic agents, acid scavenges, slip agents and mixtures thereof. The PPC preferably contains at most 2.000 wt.-%, more preferably at most 1.500 wt.-% (0.000 to 1.500 wt.-%), yet more preferably at most 1.000 wt.-%, even more preferably at most 0.500 wt.-% or at most 0.300 wt.-% of polymer(s) other than the rTPO.

The $\alpha$-nucleating agent(s) is(are) preferably particulate dispersive $\alpha$-nucleating agent(s), more preferably selected from the group consisting of low molecular weight organic type $\alpha$-nucleating agents, such as organic carboxylic acid salts, organophosphoric acid salts or combinations thereof, and inorganic type nucleating agents, such as carbonates, silicates, aluminates or alumosilicates, or combinations thereof. Examples include salts of monocarboxylic acids, such as sodium benzoate or aluminum tertbutylbenzoate, salts of di- or polycarboxylic acids, such as the disodium salt of bicyclo (2.2.1) heptane-2,3-dicarboxylic acid or the calcium salt of 1,2-cyclohexane dicarboxylicacid, and salts of diesters of phosphoric acid, such as sodium 2,2'-methylenebis (4,6,-di-tert-butylphenyl) phosphate or alum in ium-hydroxy-bis[2,2'-methylene-bis(4,6-di-t-butylphenyl) phosphate] ; in particular at least one of sodium benzoate, 1,3:2,4-bis-(3,4-dimethyl-benzylidene)-sorbitol, sodium-2,2'-methylenebis-(4,6-di-tert-butyl-phenyl)-phosphate, hydroxy-bis-(2,4,8,10-tetra-tert-butyl-6-hydroxy-12h-dibenzo-(d,g)(1,3,2)-dioxaphosphocin-oxidato)-aluminium, ADK STAB NA-21 (Adeka Palmarole, France), Hyperform HPN-20 E (Milliken, USA).

**Use and Articles**

The rTPO and/or the PPC of the present invention may be used for producing a film. Preferably, the use comprises obtaining a film by casting or extrusion. The rTPO and/or the PPC of the present invention may be used for producing a molded article. The use preferably comprises obtaining the molded article by blow molding or injection molding, more preferably by injection molding.

The present invention thus also refers to a film or article, comprising the rTPO and/or the PPC of the present invention. The film may e.g. be a packaging film for consumer goods or medical packaging, preferably obtained by casting or extrusion, such as extrusion blow molding. The article is preferably a molded article, more preferably an injection molded article. Appropriate film forming and molding processes for preparing a molded article of the present invention are commonly known to the skilled person.

**Measuring Methods**

**Melt flow rate (MFR$_2$)**

The melt flow rate (MFR$_2$) of propylene based polymers was measured at 230 °C with a load of 2.16 kg according to ISO 1133. Calculation of the MFR$_2$ of a polymer fraction (e.g. rEP), e.g. if it cannot be measured, because it cannot be isolated from the mixture, can be done in line with the principle and systematic of the formulas in WO 2017/148970 A1 (see section "calculations"); see also Kim McAuley's equation 25 in K. K. McAuley and J. F. McGregor: On-line Inference of Polymer Properties in an Industrial Polyethylene Reactor, AIChE Journal, June 1991 , Vol. 37, No, 6, pages 825-835).

**Comonomer content**

Quantitative NMR spectroscopy was used to determine comonomer content(s) of rEP, EPC and EEPC and/or to calibrate values obtained e.g. from IR-based method(s).

Quantitative $^{13}$C{$^1$H} NMR spectra were recorded in the solution-state using a Bruker Avance NEO 400 NMR spectrometer operating at 400.15 and 100.62 MHz for $^1$H and $^{13}$C respectively. All spectra were recorded using a $^{13}$C optimised 10 mm extended temperature probe head at 125 °C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 60 mM solution of relaxation agent in solvent {8} and with approximately 3 mg BHT (2,6-di-tert-butyl-4-methylphenol CAS 128-37-0). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {3, 4}. A total of 6144 (6k) transients were acquired per spectra. Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the $^{13}$C{$^1$H} spectra. This method was chosen for its robust nature and ability to account for the presence of regiodefects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5 \ (S\beta\beta + S\beta\gamma + S\beta\delta + 0.5(S\alpha\beta + S\alpha\gamma))$$

Through the use of this set of sites the corresponding integral equation becomes:

$$E = 0.5 \, (I_H + I_G + 0.5(I_C + I_D))$$

using the same notation used in the article of Wang et al. {6}. Equations used for absolute propylene content were not modified.

The mole percent comonomer incorporation was calculated from the mole fraction:

$$E \, [mol\%] = 100 * fE$$

The weight percent comonomer incorporation was calculated from the mole fraction:

$$E \, [wt.\text{-}\%] = 100 * (fE * 28.06) / ( (fE * 28.06) + ((1\text{-}fE) * 42.08) )$$

Bibliographic references:

1) Busico, V., Cipullo, R., Prog. Polym. Sci. 26 (2001) 443.
2) Busico, V., Cipullo, R., Monaco, G., Vacatello, M., Segre, A.L., Macromolecules 30 (1997) 6251.
3) Zhou, Z., Kuemmerle, R., Qiu, X., Redwine, D., Cong, R., Taha, A., Baugh, D. Winniford, B., J. Mag. Reson. 187 (2007) 225.
4) Busico, V., Carbonniere, P., Cipullo, R., Pellecchia, R., Severn, J., Talarico, G., Macromol. Rapid Commun. 2007, 28, 1128.
5) Resconi, L., Cavallo, L., Fait, A., Piemontesi, F., Chem. Rev. 2000, 100, 1253.
6) Wang, W-J., Zhu, S., Macromolecules 33 (2000), 1157.
7) Cheng, H. N., Macromolecules 17 (1984), 1950.
8) Singh, G., Kothari, A., Gupta, V., Polymer Testing 28 5 (2009), 475.
9) Kakugo, M., Naito, Y., Mizunuma, K., Miyatake, T. Macromolecules 15 (1982) 1150.
10) Randall, J. Macromol. Sci., Rev. Macromol. Chem. Phys. 1989, C29, 201.
11) Resconi, L., Cavallo, L., Fait, A., Piemontesi, F., Chem. Rev. 2000, 100, 1253.

Calculation of the comonomer (e.g. ethylene) content of a polymer fraction (e.g. EPC), e.g. if it cannot be measured, because it cannot be isolated from the mixture, can be done in line with the principle and systematic of the formulas in WO 2017/148970 A1 (see section "calculations").

**DSC analysis, melting temperature ($T_m$), melting enthalpy ($H_m$), crystallization temperature ($T_c$) and crystallization enthalpy ($H_c$)**

Melting peak temperatures ($T_m$), melting enthalpies ($H_m$), crystallization peak temperature ($T_c$) and crystallization enthalpy ($H_c$) was measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. Crystallization peak temperature ($T_c$) and crystallization enthalpy ($H_e$) were determined from the cooling step, while melting peak temperature(s) ($T_m$) and melting enthalpy(ies) ($H_m$) were determined from the second heating step.

**CRYSTEX Method** - Determination of crystalline and soluble fractions and their respective properties (Intrinsic Viscosity (IV) and ethylene (C2) content) Note: Crystallization extraction (CRYSTEX) analyses the polymeric part of each component, with non-polymeric parts, such as any fillers or particulate pigments, not contributing to the reported CRYSTEX data presented.

The crystalline (CF) and soluble fractions (SF) of the polypropylene compositions (PPC) as well as the comonomer content and intrinsic viscosities of the respective fractions were analyzed by use of the Crystex (crystallization extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the ethylene content in Ethylene-Propylene (EP) copolymers. The IR4 detector is calibrated with series of 8 EP copolymers with known ethylene content in the range of 2 wt.-% to 69 wt.-% (determined by $^{13}C$-NMR) and each at various concentrations, in the range of 2 and 13 mg/ml. To encounter for both features, concentration and ethylene content at the same time for various polymer concentration expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3) \qquad \text{Equation 1)}$$

$$CH_3/1000C = a + b*Abs(CH) + c*(Abs(CH_3) + d*(Abs(CH_3)/Abs(CH)) + e*(Abs(CH_3)/Abs(CH))^2 \qquad \text{(Equation 2)}$$

The constants a to e for equation 1 and a to f for equation 2 were determined by using least square regression analysis.

The $CH_3/1000C$ is converted to the ethylene content in wt.-% using the following relationship:

$$\text{wt.-\% (ethylene in copolymer)} = 100 - CH_3/1000TC*0.3 \qquad \text{(Equation 3)}$$

Amounts of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XCS content in the range 2-31 wt.-%. A linear calibration curve is used.

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3 at 135 °C. Calibration is achieved with various EP copolymers and PP polymers with IV = 2-4 dL/g. The determined calibration curve is linear.

The samples to be analyzed are weighed out in concentrations of 10mg/ml to 20 mg/ml. After automated filling of the vial with 1,2,4-trichlorbenzole (TCB) containing 250 mg/l 2,6-tert-butyl-4-methylphenol (BHT) as antioxidant, the sample is dissolved at 170 °C until complete dissolution is achieved with either constant stirring or gentle shaking. To avoid sample degradation, polymer solution is blanketed with the $N_2$ atmosphere during dissolution. For a PP composition containing inorganic fillers or pigments or any other non-TCB soluble polymeric substances removal of these is required. This can be done by hot filtration prior injection.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

**Flexural Modulus (FM)**

The flexural modulus was determined according to ISO 178 method A (3-point bending test) on $80 \times 10 \times 4$ $mm^3$ specimens. Following the standard, a test speed of 2 mm/min and a span length of 16 times the thickness was used. The testing temperature was $23 \pm 2°$ C. Injection molding was carried out according to ISO 19069-2 using a melt temperature of 230 °C for all materials irrespective of material melt flow rate.

**Dynamic Mechanical Thermal Analysis (DMTA)** - **glass transition temperature (Tg) and Storage Modulus**

The glass transition temperature $T_g$ was determined by dynamic mechanical thermal analysis (DMTA) according to ISO 6721-7. The measurements were done in torsion mode on compression molded samples ($35x10x1$ $mm^3$) between -130 °C and +160 °C with a heating rate of 2 °C/min and a frequency of 1 Hz.

Storage modulus G' was determined at +23 °C according ISO 6721-7:1996. The measurements were the same as for $T_g$ in which it was calculated at the peaks of tan delta (=G"/G').

**Brittle to ductile transition temperature (BDTT)** - **Impact Strength**

The determination of the brittle to ductile transition temperature (BDTT) is based on the a(cN) values as determined from Charpy instrumented impact strength according to ISO 179-2:2000 on V-notched specimen with a geometry of 80x10x4 mm$^3$ as set forth in ISO 179-1eA. The a(cN) values were determined in intervals of 3 °C from -40 °C to +41 °C with an impact velocity of 1.5 m/s and plotted over temperature, calculating the BDTT the average value of the step increase. For a detailed description of the determination of the BDTT reference is made to Grein, C. et al, Impact Modified Isotactic Polypropylene with Controlled Rubber Intrinsic Viscosities: Some New Aspects About Morphology and Fracture, J Appl Polymer Sci, 87 (2003), 1702-1712.

**Examples**

The following Examples are included to demonstrate certain aspects and embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

The rTPOs of inventive example IE1 and comparative examples CE1 and CE2 were prepared in a Borstar PP pilot unit with sequential process comprising a pre-polymerization reactor, a slurry-phase loop reactor and three gas phase reactors. The reaction conditions are summarized in Table 1. The catalyst used was a Ziegler-Natta catalyst (system) as used and described for the inventive examples of WO 2016/066446 A1, pre-polymerized with vinylcyclohexane to achieve nucleation with poly(vinylcyclohexane) was used. Nucleation by pre-polymerization with vinylcyclohexane is described in EP 2 960 256 B1 and EP 2 960 279 B1 in detail. The catalyst systems defined above was used in combination with triethyl-aluminium (TEAL) as co-catalyst and dicyclopentadienyl-dimethoxy silane (donor D) as external donor.

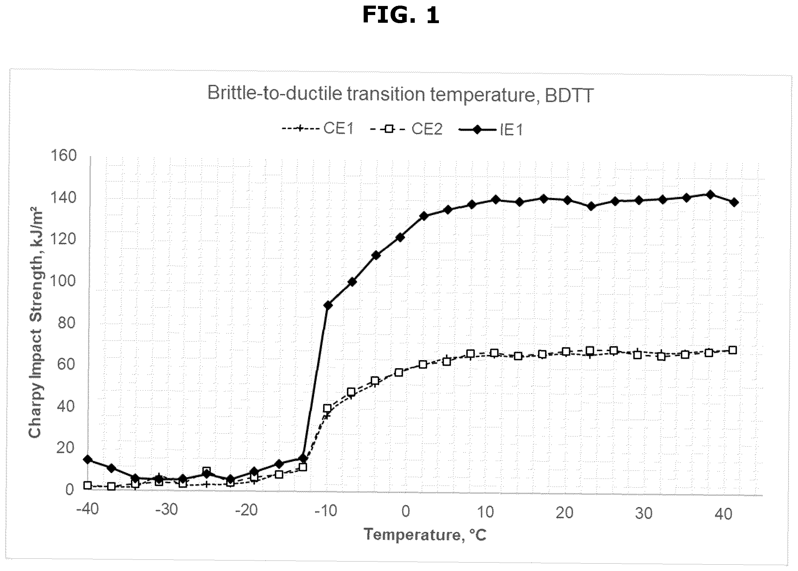

Properties of the rTPOs determined on pelletized product, stabilized with 0.075 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4) and 0.05 wt.-% acid scavenger (CAS-no.1592-23-0, commercially available from Faci, Italy) are set forth in Table 2. Moreover, the temperature-dependence of the Charpy impact strength for the respective polymers is shown in FIG. 1. As can be seen from FIG. 1 and Table 2, the rTPO of the present invention shows a significant improvement of impact properties (toughness) as soon as the BDTT is exceeded without significant loss of stiffness.

**Table 1:**

|  |  | CE1 | CE2 | IE1 |
|---|---|---|---|---|
| **Pre-polymerization** |  |  |  |  |
| pressure | bar(g) | 53 | 53 | 53 |
| temperature | °C | 20 | 20 | 20 |
| H2/C3 | mol/kmol | 0.74 | 0.74 | 0.74 |
| Al/donor | mol/mol | 40 | 40 | 40 |
| Donor/Ti | mol/mol | 10 | 10 | 10 |
|  |  |  |  |  |
| **LOOP** |  |  |  |  |
| pressure | bar(g) | 53 | 53 | 53 |
| temperature | °C | 75 | 75 | 75 |
| H2/C3 | mol/kmol | 1.67 | 2.19 | 2.20 |
| residence time | h | 0.37 | 0.36 | 0.38 |
|  |  |  |  |  |
| matrix split | wt.-% | 56 | 64 | 64 |
| product split | wt.-% | 46 | 51 | 51 |
| MFR (in/after LOOP) | g/10min | 4.31 | 5.32 | 5.32 |

(continued)

| LOOP | | | | |
|---|---|---|---|---|
| | | | | |
| **GPR1** | | | | |
| pressure | bar(g) | 21 | 21 | 21 |
| temperature | °C | 80 | 80 | 80 |
| C2/C3 | mol/kmol | 50 | 46 | 46 |
| H2/C3 | mol/kmol | 6.4 | 4.5 | 4.5 |
| residence time | h | 0.76 | 0.71 | 0.63 |
| | | | | |
| matrix split | wt.-% | 44 | 36 | 36 |
| product split | wt.-% | 37 | 29 | 29 |
| MFR (after GPR1) | g/10min | 1.92 | 1.98 | 1.98 |
| MFR (in GPR1) | g/10min | 0.69 | 0.35 | 0.35 |
| C2 (after GPR1) | wt.-% | 3.6 | 3.2 | 3.2 |
| C2 (in GPR1) | wt.-% | 8.2 | 8.6 | 8.6 |
| | | **CE1** | **CE2** | **IE1** |
| **GPR2** | | | | |
| pressure | bar(g) | 23 | 23 | 23 |
| temperature | °C | 80 | 80 | 80 |
| C2/C3 | mol/kmol | 446 | 439 | 431 |
| H2/C2 | mol/kmol | 304 | 303 | 315 |
| residence time | h | 1.25 | 1.22 | 1.23 |
| | | | | |
| GPR2/GPR3 split | wt.-% | 100 | 70 | 65 |
| product split | wt.-% | 17 | 14 | 13 |
| MFR (after GPR2) | g/10min | 1.9 | 2.3 | 2.6 |
| C2 (after GPR2) | wt.-% | 10.7 | 10.3 | 11.1 |
| C2 (in GPR2) | wt.-% | 45.4 | 50.8 | 59.8 |
| | | | | |
| **GPR3** | | | | |
| pressure | bar(g) | - | 25 | 24 |
| temperature | °C | - | 80 | 80 |
| C2/C3 | mol/kmol | - | 1798 | 1505 |
| H2/C2 | mol/kmol | - | 502 | 506 |
| residence time | h | - | 1.21 | 1.01 |
| | | | | |
| GPR2/GPR3 split | wt.-% | 0 | 30 | 35 |
| product split | wt.-% | 0 | 6 | 7 |
| MFR (after GPR3) | g/10min | - | 2.3 | 2.6 |
| C2 (after GPR3) | wt.-% | - | 12.4 | 12.7 |

(continued)

| GPR3 | | | | |
|---|---|---|---|---|
| C2 (in GPR3) | wt.-% | - | 49.2 | 50.9 |

**Table 2**

| Final product pellet | | | | |
|---|---|---|---|---|
| MFR2 | g/10min | 1.9 | 2.3 | 2.6 |
| Tc | °C | 126 | 127 | 127 |
| Hc | J/g | 74 | 74 | 73 |
| Tm | °C | 164 | 164 | 164 |
| Hm | J/g | 75 | 76 | 74 |
| C2 content | wt.-% | 10.7 | 12.4 | 12.7 |
| SF (soluble fraction) | wt.-% | 22.3 | 23.7 | 24.2 |
| CF (crystalline fraction) | wt.-% | 77.7 | 76.3 | 75.8 |
| C2 (SF) | wt.-% | 32.0 | 35.5 | 35.5 |
| C2 (CF) | wt.-% | 4.76 | 5.10 | 5.58 |
| IV (rTPO) | dL/g | 2.54 | 2.45 | 2.42 |
| IV (SF) | dL/g | 1.88 | 1.84 | 1.83 |
| IV (CF) | dL/g | 2.69 | 2.59 | 2.54 |
| Flex. modulus | MPa | 707 | 736 | 730 |
| Storage mod. G' at 23 °C | MPa °C | 455 | 461 | 450 |
| Tg(1) | °C | -51.3 | -52.1 | -52.3 |
| Tg(2) | °C | -1.9 | 0.2 | -0.1 |
| Charpy NIS -10 °C | kJ/m$^2$ | 36.4 | 40.0 | 89.5 |
| Charpy NIS +23 °C | kJ/m$^2$ | 66.8 | 68.9 | 138.0 |
| BDTT | °C | -13 | -13 | -13 |

**Claims**

1. A reactor thermoplastic polyolefin (rTPO) comprising:

(A) 35.0 to 70.0 wt.-% based on the rTPO of a polypropylene homopolymer fraction (PPH),
(B) 20.0 to 50.0 wt.-% based on the rTPO of a random ethylene/propylene (C2C3) polymer fraction (rEP), preferably having an ethylene content, determined by quantitative NMR according to the description, in the range of 1.50 to 12.00 wt.-%,
(C) 5.0 to 25.0 wt.-% based on the rTPO of a first C2C3 elastomeric propylene copolymer fraction (EPC), and
(D) 4.0 to 20.0 wt.-% based on the rTPO of a second C2C3 ethylene propylene copolymer fraction (EEPC),

wherein

the rTPO has a melt flow rate MFR$_2$, according to ISO 1133 at 230 °C and 2.16 kg load, in the range of 1.0 to 5.0 g/10 min,
the rTPO has a soluble fraction (SF) and a crystalline fraction (CF), both determined by CRYSTEX measurement according to the description, wherein the soluble fraction is present in an amount in the range of 20.0 to 40.0 wt.-%, and
the rTPO has an impact strength, Charpy notched impact strength according to ISO 179-1 at 23 °C, of more than

75.0 kJ/m$^2$, preferably in the range of 75.0 to 200.0 kJ/m$^2$, such as in the range of 80.0 to 180.0 kJ/m$^2$, more preferably 100.0 to 160.0 kJ/m$^2$, or 120.0 to 150.0 kJ/m$^2$.

2. The reactor thermoplastic polyolefin (rTPO) according to claim 1, having one or more, preferably all of the below properties:

   a total ethylene (C2) content (C2$_{tot}$), determined by CRYSTEX measurement calibrated with NMR according to the description, in the range of 10.0 to 20.0 wt.-%,
   a brittle to ductile transition temperature (BDTT), determined according to ISO 179-2, in the range of -30.0 °C to 10.0 °C, and
   a flexural modulus (FM), according to ISO 178, in the range of 600 to 900 MPa.

3. The reactor thermoplastic polyolefin (rTPO) according to claim 1 or 2, having one or more, preferably all of the below properties:

   an ethylene content of soluble fraction (C2$_{SF}$), determined by CRYSTEX measurement calibrated with NMR according to the description, in the range of 20.0 to 80.0 wt.-%,
   an intrinsic viscosity of soluble fraction (IV$_{SF}$), determined by CRYSTEX measurement according to the description, in the range of 1.40 to 4.00 dL/g,
   an ethylene content of the crystalline fraction (C2$_{CF}$), determined by CRYSTEX measurement calibrated with NMR according to the description, in the range of 2.5 to 20.0 wt.-%, and
   an intrinsic viscosity of the crystalline fraction (IV$_{CF}$), determined by CRYSTEX measurement according to the description, in the range of 1.00 dL/g to 6.00 dL/g, preferably 1.30 to 5.00 dL/g, more preferably 1.60 to 4.50 dL/g, yet more preferably 1.80 to 4.00 dL/g, or 2.00 to 3.50 dL/g.

4. The reactor thermoplastic polyolefin (rTPO) according to any one of the preceding claims, wherein the second C2C3 ethylene propylene copolymer fraction (EEPC) is produced in a gas phase reactor (GPR) under conditions of a C2/C3 ratio (ethylene/propylene ratio) of 1600 mol/kmol or less, preferably in the range of 500 to 1600 mol/kmol, such as 700 to 1580 mol/kmol, more preferably 900 to 1550 mol/kmol, or 1100 to 1525 mol/kmol.

5. The reactor thermoplastic polyolefin (rTPO) according to any one of the preceding claims, wherein the first C2C3 elastomeric propylene copolymer fraction (EPC) is produced in a gas phase reactor (GPR) and the second C2C3 ethylene propylene copolymer fraction (EEPC) is independently produced in a further gas phase reactor (GPR).

6. The reactor thermoplastic polyolefin (rTPO) according to any one of the preceding claims, wherein the C2/C3 ratio (ethylene/propylene ratio) when producing the EEPC is at least 1.2 times, more preferably at least 1.5 times, or at last 2.0 times, such as 1.2 times to 5.5 times, more preferably 1.5 times to 5.0 times, or 2.0 times to 4.0 times the C2/C3 ratio (feed ratio) when producing the EPC.

7. The reactor thermoplastic polyolefin (rTPO) according to any one of the preceding claims, having one or more, preferably all of the below properties:

   the random ethylene/propylene (C2C3) polymer fraction (rEP) has a C2 content (C2$_{rEP}$), determined by quantitative NMR according to the description, in the range of 2.00 to 11.00 wt.-%, preferably 2.50 to 10.00 wt.-%, such as 2.80 to 9.00 wt.-%;
   the first C2C3 elastomeric propylene copolymer fraction (EPC) has a C2 content (C2$_{EPC}$), determined by quantitative NMR according to the description, of 35.00 wt.-% or more, preferably in the range of 35.00 to 95.00 wt.-%, such as 35.00 to 80.00 wt.-%, yet more preferably 38.00 to 75.00 wt.-%, even more preferably 42.00 to 70.00 wt.-%, most 45.00 to 66.00 wt.-%, or 50.00 to 65.00 wt.-%;
   the second C2C3 elastomeric propylene copolymer fraction (EEPC) has a C2 content (C2$_{EEPC}$), determined by quantitative NMR according to the description, of 35.00 wt.-% or more, preferably in the range of 35.00 to 95.00 wt.-%, such as 35.00 to 75.00 wt.-%, yet more preferably 38.00 to 70.00 wt.-%, even more preferably 40.00 to 65.00 wt.-%, most preferably 42.00 to 60.00 wt.-%, or 43.00 to 59.00 wt.-%;
   the PPH is contained in the rTPO in an amount in the range of 40.0 to 68.0 wt.-%, such as 42.0 to 62.0 wt.-%;
   the rEP is contained in the rTPO in an amount in the range of 22.0 to 45.0 wt.-%, such as 24.0 to 40.0 wt.-%;
   the EPC is contained in the rTPO in an amount in the range of 8.0 to 20.0 wt.-%, more preferably 10.0 to 17.0 wt.-%;
   the EEPC is contained in the rTPO in an amount in the range of 5.0 to 15.0 wt.-%, such as 5.5 to 12.0 wt.-%, or 6.0 to 11.0 wt.-%.

8. The reactor thermoplastic polyolefin (rTPO) according to any one of the preceding claims, having one or more, preferably all of the below properties:

a soluble fraction (SF), determined by CRYSTEX measurement according to the description, in an amount in the range of 20.0 to 35.0 wt.-%, preferably 20.0 to 30.0 wt.-%,

a total ethylene (C2) content ($C2_{tot}$), determined by CRYSTEX measurement calibrated with NMR according to the description, in the range of 10.0 to 15.0 wt.-%, preferably 11.0 to 15.0 wt.-%,

an ethylene content of the soluble fraction ($C2_{SF}$), determined by CRYSTEX measurement calibrated with NMR according to the description, in the range of 25.0 to 60.0 wt.-%, preferably 28.0 to 50.0 wt.-%,

an intrinsic viscosity of the soluble fraction ($IV_{SF}$), determined by CRYSTEX measurement according to the description, in the range of 1.50 to 3.00 dL/g, preferably 1.60 to 2.50 dL/g,

an ethylene content of the crystalline fraction ($C2_{CF}$), determined by CRYSTEX measurement calibrated with NMR according to the description, in the range of 3.0 to 15.0 wt.-%, preferably 3.5 to 8.0 wt.-%,

an intrinsic viscosity of the crystalline fraction ($IV_{CF}$), determined by CRYSTEX measurement according to the description , in the range of 1.00 dL/g to 6.00 dL/g, preferably 1.30 to 5.00 dL/g, more preferably 1.60 to 4.50 dL/g, yet more preferably 1.80 to 4.00 dL/g, or 2.00 to 3.50 dL/g,

a brittle to ductile transition temperature (BDTT), determined according to ISO 179-2, in the range of -30.0 °C to 0.0 °C, preferably in the range of -25.0 °C to -8.0 °C,

a flexural modulus (FM), according to ISO 178, in the range of 610 to 850 MPa, preferably 650 to 850 MP, more preferably 650 to 830 MPa, yet more preferably 680 to 830 MPa, or 680 to 800 MPa,

a $MFR_2$, according to ISO 1133 at 230 °C and 2.16 kg load, in the range of 1.2 to 4.0 g/10 min, preferably in the range of 1.4 to 3.5 g/10 min.

9. The reactor thermoplastic polyolefin (rTPO) according to any one of the preceding claims, having one or more, preferably all of the below properties:

a storage modulus G', as determined by dynamic mechanical analysis according to ISO 6721-7 at 23 °C, in the range of 250 to 650 MPa, preferably 350 to 550 MPa,

an impact strength, Charpy notched impact strength according to ISO 179-2 at -34 °C, of less than 15.0 $kJ/m^2$, preferably less than 10.0 $kJ/m^2$, such as in the range of from 1.0 to less than 15.0 $kJ/m^2$, or 2.0 to less than 10.0 $kJ/m^2$,

an impact strength, Charpy notched impact strength according to ISO 179-2 at -10 °C, in the range of 40.0 to 130.0 $kJ/m^2$, such as in the range of 50.0 to 110.0 $kJ/m^2$, or 55.0 to 100.0 $kJ/m^2$,

an impact strength, Charpy notched impact strength according to ISO 179-2 at 2 °C, in the range of 50.0 to 200.0 $kJ/m^2$, such as in the range of 80.0 to 170.0 $kJ/m^2$, or 110.0 to 160.0 $kJ/m^2$,

a crystallization temperature (Tc), according to DSC, in the range of 105.0 to 140.0 °C, preferably 115.0 to 135.0 °C,

a melting temperature (Tm), according to DSC, in the range of 150.0 to 175.0 °C, preferably 155.0 to 170.0 °C,

two glass transition temperatures Tg1 and Tg2, as determined by dynamic mechanical analysis according to the description, wherein Tg1 is preferably in the range of from -65 °C to -35 °C, such as in the range of - 60 °C to -40 °C, or in the range of -57 °C to -45 °C, and Tg2 is preferably in the range of from -10 °C to 10 °C, such as in the range of -8 °C to 8 °C, or in the range of -6 °C to 6 °C.

10. The reactor thermoplastic polyolefin (rTPO) according to any one of the preceding claims, having one or more, preferably all of the below properties:

the rTPO has an intrinsic viscosity $IV_{rTPo}$, determined by CRYSTEX measurement according to the description, in the range of 1.40 to 3.50 dL/g, preferably 1.50 to 3.00 dL/g;

the rTPO is a reactor blend made in a polymerization process comprising at least four stages, in the presence of a catalyst system, preferably a Ziegler Natta catalyst system, wherein the polymerization process comprising at least four stages preferably applies a slurry reactor (SR) - gas phase reactor (GPR1) - gas phase reactor (GPR2) - gas phase reactor (GPR3) cascade, such that the PPH is made in the SR, the rEP is made in the GPR1, the EPC is made in the GPR2, and the EEPC is made in the GPR3, the catalyst system being preferably present at least in the SR;

the rTPO is nucleated by means of a polymeric α-nucleating agent, preferably poly(vinyl cyclohexane) or poly(vinyl cyclopentane), the polymeric α-nucleating agent being preferably present in an amount in the range of 0.0001 to 0.100 wt.-%, preferably 0.005 to 0.050 wt.-%, more preferably 0.001 to 0.01 wt.-%, relative to the rTPO as a whole being taken as 100%;

the rTPO has a normalized impact strength of at least 1.5, preferably at least 1.7 or at least 2.0, wherein the normalized impact strength is determined as the ratio ($CIP_{rTPO}/CIP_{lrTPO}$) between the impact strength ($CIP_{rTPO}$), Charpy notched impact strength according to ISO 179-2 at 23 °C, of the rTPO and the impact strength ($CIP_{lrTPO}$), Charpy notched impact strength according to ISO 179-2 at 23 °C, of a limited reactor thermoplastic polyolefin (lrTPO), the lrTPO being identical to the rTPO except for not containing the EEPC.

11. A polypropylene composition (PPC), comprising based on the total weight of the PPC,

90.000 to 99.999 wt.-%, preferably 95.000 to 99.990 wt.-%, more preferably 97.000 to 99.950 wt.-%, most preferably 97.500 to 99.900 wt.-%, of the reactor thermoplastic polyolefin (rTPO) as defined in any one of claims 1 to 10,

up to 4.000 wt.-%, such as 0.001 to 3.000 wt.-%, 0.010 to 2.500 wt.-%, 0.010 to 2.000 wt.-%, 0.050 to 1.800 wt.-%, or 0.100 to 1.500 wt.-% of non-polymeric nucleating agent(s), preferably at least $\alpha$ nucleating agent(s), and

up to 10.000 wt.-%, such as 0.001 to 10.000 wt.-%, 0.010 to 5.000 wt.-%, 0.010 to 3.500 wt.-%, 0.015 to 3.000 wt.-%, 0.025 to 2.500 wt.-%, 0.050 to 1.500 wt.-%, or 0.075 to 0.750 wt.-% additive(s) based on the PPC, said additives being preferably selected from the group consisting of antioxidants, UV-stabilizers, antistatic agents, acid scavenges, slip agents and mixtures thereof.

12. A method for producing a reactor thermoplastic polyolefin (rTPO) as defined in any one of claims 1 to 10 by a process comprising the steps of:

a) Polymerizing propylene in the presence of a Ziegler-Natta type catalyst system in a first polymerization reactor, for producing the polypropylene homopolymer fraction (PPH) as a first polymer fraction (A);

b) Transferring the polymerization mixture comprising the Ziegler-Natta type catalyst system and the first polymer fraction from the first polymerization reactor to a second polymerization reactor;

c) Polymerizing propylene and ethylene in the presence of the Ziegler-Natta type catalyst system in the second polymerization reactor for producing the random ethylene/propylene (C2C3) polymer fraction (rEP) as a second polymer fraction (B);

d) Transferring a polymerization mixture comprising the Ziegler-Natta type catalyst system and the first and second polymer fractions from the second polymerization reactor to a third polymerization reactor;

e) Polymerizing propylene and ethylene in the presence of the Ziegler-Natta type catalyst system in the third polymerization reactor for producing the first C2C3 elastomeric propylene copolymer fraction (EPC) as a third polymer fraction (C), which is dispersed in the first and second polymer fractions acting as matrix;

f) Transferring a polymerization mixture comprising the Ziegler-Natta type catalyst system and the first, second and third polymer fractions from the third polymerization reactor to a fourth polymerization reactor;

g) Polymerizing propylene and ethylene in the presence of the Ziegler-Natta type catalyst system in the fourth polymerization reactor, at a higher C2/C3 (feed) ratio than employed in the third polymerization reactor, for producing the second C2C3 ethylene propylene copolymer fraction (EEPC) as a fourth polymer fraction (D), which is dispersed in the matrix;

h) Withdrawing the polymerization mixture comprising the Ziegler-Natta type catalyst system, the first, second, third and fourth polymer fractions (A, B, C, D) from the fourth polymerization reactor; and

i) Obtaining the reactor thermoplastic polyolefin (rTPO) comprising the polypropylene homopolymer fraction (PPH) and the random ethylene/propylene (C2C3) polymer fraction (rEP) as matrix and the first C2C3 elastomeric propylene copolymer fraction (EPC) as well as the second C2C3 ethylene propylene copolymer fraction (EEPC) being dispersed in the matrix,

the process optionally further comprising a pre-polymerization step prior to the (first) polymerization step in the first polymerization reactor, whereby a mixture of the Ziegler-Natta catalyst system and a polypropylene pre-polymer produced in a pre-polymerization reactor is obtained and subsequent to the pre-polymerization, the mixture of the Ziegler-Natta catalyst system and the polypropylene pre-polymer produced in the pre-polymerization reactor is transferred to the first polymerization reactor.

13. Method for producing a rTPO according to claim 12, wherein

the process further comprises pre-polymerizing a Ziegler-Natta catalyst forming the Ziegler-Natta catalyst system with a suitable monomer, preferably vinyl cyclohexane or vinyl cyclopentane, to produce a polymeric

$\alpha$-nucleating agent; and/or

the first polymerization reactor is preferably a slurry reactor, the second polymerization reactor is a first gas phase reactor (GPR1), the third polymerization reactor is a second reactor gas phase reactor (GPR2), and the fourth polymerization reactor is a third reactor gas phase reactor (GPR3); and/or

wherein the Ziegler-Natta catalyst system comprises

(a) a Ziegler-Natta catalyst (ZN-C) comprising compounds (TC) of a transition metal of Group 4 to 6 (according to IUPAC), a Group 2 metal compound (MC) and an internal donor (ID),

(b) a co-catalyst (Co), and

(c) optionally an external donor (ED).

14. Use of the rTPO according to any one of claims 1 to 10 and/or of the PPC according to claim 11 for producing a film, preferably obtained by casting or extrusion, or producing a molded article, preferably obtained by blow or injection molding, more preferably by injection molding.

15. Film or article, comprising the rTPO according to any one of claims 1 to 10 and/or the PPC according to claim 11,

wherein the film is a packaging film for consumer goods or medical packaging, preferably obtained by casting or extrusion, such as extrusion blow molding, or

wherein the article is a molded article, preferably an injection molded article.

## FIG. 1

Brittle-to-ductile transition temperature, BDTT

**EUROPEAN SEARCH REPORT**

Europäisches
Patentamt
European
Patent Office
Office européen
des brevets

Application Number

EP 24 18 4899

## DOCUMENTS CONSIDERED TO BE RELEVANT

| Category | Citation of document with indication, where appropriate, of relevant passages | Relevant to claim |
|---|---|---|
| X | WO 2012/062736 A1 (BOREALIS AG [AT]; LESKINEN PAULI [FI]; GREIN CHRISTELLE [AT]) 18 May 2012 (2012-05-18)<br>* page 7, lines 4-8 *<br>* pages 18-19, table 1, example IE1 *<br>* page 20, tables 2-3, example IE1 *<br>----- | 1-15 |
| X | WO 2022/008434 A1 (BOREALIS AG [AT]) 13 January 2022 (2022-01-13)<br>* pages 23-26, tables 1-2, example IE4 *<br>* claims 1, 11 *<br>----- | 1-11,14, 15 |
| X | WO 2019/002300 A1 (BOREALIS AG [AT]) 3 January 2019 (2019-01-03)<br>* page 52, table 2, example HECO1f *<br>* claim 15 *<br>----- | 1-8, 10-15 |

**CLASSIFICATION OF THE APPLICATION (IPC)**

INV.
C08F210/06
C08L23/12

**TECHNICAL FIELDS SEARCHED (IPC)**

C08F
C08L

The present search report has been drawn up for all claims

| Place of search | Date of completion of the search | Examiner |
|---|---|---|
| Munich | 11 December 2024 | Luka, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 4899

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | | Publication date |
|---|---|---|---|---|
| WO 2012062736 A1 | 18-05-2012 | CN | 103201338 A | 10-07-2013 |
| | | EA | 201300547 A1 | 30-08-2013 |
| | | EP | 2452975 A1 | 16-05-2012 |
| | | EP | 2638108 A1 | 18-09-2013 |
| | | US | 2013267660 A1 | 10-10-2013 |
| | | WO | 2012062736 A1 | 18-05-2012 |
| WO 2022008434 A1 | 13-01-2022 | CN | 115916852 A | 04-04-2023 |
| | | EP | 3936565 A1 | 12-01-2022 |
| | | TW | 202206534 A | 16-02-2022 |
| | | US | 2023279208 A1 | 07-09-2023 |
| | | WO | 2022008434 A1 | 13-01-2022 |
| WO 2019002300 A1 | 03-01-2019 | BR | 112019022391 A2 | 19-05-2020 |
| | | CA | 3061439 A1 | 03-01-2019 |
| | | CN | 110741038 A | 31-01-2020 |
| | | EP | 3421538 A1 | 02-01-2019 |
| | | US | 2021139683 A1 | 13-05-2021 |
| | | WO | 2019002300 A1 | 03-01-2019 |
| | | ZA | 201906481 B | 27-10-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2480606 B1
- EP 3212711 B1
- EP 3212713 B1
- EP 3212712 B1
- EP 3953401 A1
- EP 3574025 B1
- WO 2014187687 A1
- WO 2017198633 A1
- WO 2017148970 A1

- WO 2012007430 A1
- EP 2610271 A1
- EP 261027 A1
- EP 2610272 A1
- EP 4141068 A1
- WO 2016066446 A1
- EP 2960256 B1
- EP 2960279 B1

**Non-patent literature cited in the description**

- **K. K. MCAULEY** ; **J. F. MCGREGOR**. On-line Inference of Polymer Properties in an Industrial Polyethylene Reactor. *AIChE Journal*, June 1991, vol. 37 (6), 825-835
- *CHEMICAL ABSTRACTS*, 128-37-0
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950

- **SINGH, G.** ; **KOTHARI, A.** ; **GUPTA, V.** *Polymer Testing*, 2009, vol. 28 (5), 475
- **KAKUGO, M.** ; **NAITO, Y.** ; **MIZUNUMA, K.** ; **MIYATAKE, T.** *Macromolecules*, 1982, vol. 15, 1150
- **RANDALL, J.** *Macromol. Sci., Rev. Macromol. Chem. Phys.*, 1989, vol. C29, 201
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- **GREIN, C. et al.** Impact Modified Isotactic Polypropylene with Controlled Rubber Intrinsic Viscosities: Some New Aspects About Morphology and Fracture. *J Appl Polymer Sci*, 2003, vol. 87, 1702-1712
- *CHEMICAL ABSTRACTS*, 6683-19-8
- *CHEMICAL ABSTRACTS*, 31570-04-4
- *CHEMICAL ABSTRACTS*, 1592-23-0